# EUROPEAN PATENT SPECIFICATION

(11) **EP 3 738 845 B1**
(45) Date of publication and mention of the grant of the patent: **07.12.2022**
(21) Application number: 19753893.7
(22) Date of filing: 29.01.2019
(51) Int. Cl.: B60T 8/00, B60R 21/0134, B60T 7/12, G08G 1/16, B60T 8/32, B60T 8/172, B60W 30/085

(54) **VEHICLE CONTROL DEVICE**
FAHRZEUGSTEUERUNGSVORRICHTUNG
DISPOSITIF DE COMMANDE DE VÉHICULE

(30) Priority: 16.02.2018 JP 2018025811
(43) Date of publication of application: 18.11.2020
(73) Proprietor: MAZDA MOTOR CORPORATION, Hiroshima 730-8670 (JP)
(72) Inventor: CHEN, Xi, Aki-gun, Hiroshima 730-8670 (JP); OHMURA, Hiroshi, Aki-gun, Hiroshima 730-8670 (JP); NAKAGAMI, Takashi, Aki-gun, Hiroshima 730-8670 (JP); KATAYAMA, Shota, Aki-gun, Hiroshima 730-8670 (JP); TEZUKA, Rie, Aki-gun, Hiroshima 730-8670 (JP)
(74) Representative: Thoma, Michael
(86) International application number: PCT/JP2019/002829
(87) International publication number: WO 2019/159675

(56) References cited:
- JP-A- 2007 161 056
- JP-A- 2007 161 056
- JP-A- 2015 214 325
- US-A1- 2015 321 649

## Description

### Technical Field

The present invention relates to a technique of assisting an operation of a brake pedal by a driver.

### Background Art

Conventionally, a brake assist control is known which provides a braking force to a brake to brake a vehicle when a driver presses down the brake pedal, the provided braking force being equal to or greater than a braking force corresponding to a depression amount given to the brake pedal by a driver.

The brake assist control is a system which increases a braking force to avoid a collision with an obstacle ahead of an own vehicle in such a case that a driver notices the obstacle at a late timing and then performs a brake operation. Since the brake assist control does not operate unless the driver performs a brake operation, an autonomous emergency braking (AEB) control which is more powerful than the brake assist control and operates independent of a depression amount of the brake pedal is operated in a case where a brake operation by the driver is delayed.

A conventional brake assist control is disclosed, for example, in JP 2008-296886 A. JP 2008-296886 A discloses a vehicle brake assist device in which time to collision (TTC) is calculated by dividing a distance between an own vehicle and an obstacle ahead by a relative speed of the own vehicle to the obstacle ahead and a brake assist control is started when the time to collision is smaller than a brake assist reference time. Specifically, in the vehicle brake assist device disclosed in JP 2008-296886 A, the brake assist reference time is set longer for a higher relative speed, so that the brake assist control starts at an earlier timing for a higher relative speed.

As a concept similar to the time to collision, there is a time headway (THW) obtained by dividing an inter-vehicle gap between a preceding vehicle and an own vehicle by a vehicle speed of the own vehicle. There is JP 2002-163797 A as a conventional art document which discloses performing an autonomous braking control using the time headway. Disclosed in JP 2002-163797 A is a vehicle collision prevention device that computes a target deceleration required to keep a suitable inter-vehicle gap between an own vehicle and a preceding vehicle, the suitable inter-vehicle gap being set based on an estimated minimum distance between the preceding vehicle and the own vehicle, and the time headway.

Meanwhile, even in a case of a low relative speed, for example, in a scene where the speed is high and the inter-vehicle gap is small, there is a high risk of the own vehicle colliding with the preceding vehicle when the preceding vehicle suddenly decelerates. Hence, it is desirable to operate the brake assist control at an early timing in the above scene.

However, in JP 2008-296886 A, only the time to collision is considered, and the brake assist reference time is set to a lower value for a lower relative speed. Thus, when the technique in JP 2008-296886 A is applied to the scene described above, the time to collision increases as a relative speed is lowered. Hence, the time to collision is hard to become smaller than the brake assist reference time, and there arises a problem that operation of the brake assist control is delayed.

In addition, in JP 2002-163797 A, although the time headway is considered, the time headway is used for setting a suitable inter-vehicle gap, but is not used for operating the brake assist control. Moreover, the technique disclosed in JP 2002-163797 A is not related to the brake assist control but to an autonomous braking control that operates independent of the depression amount of the brake pedal. Thus, the condition of the technique differs from that of the present application.

### Citation List

### Patent Literature

Furthermore, JP 2007-161056 A discloses a brake assist control for a vehicle calculating a risk potential from a determined time to collision and a determined inter-vehicle time on the basis of an equation including the aforementioned two parameters. Depending on the calculated risk potential, a brake pedal reaction force is adjusted, wherein the operation reaction force is controlled to allow the brake pedal to be depressed easily as the risk potential increases.

### Summary of Invention

The present inventors have come to an idea that, if not only time to collision but also time headway is considered, a delay in operating a brake assist control can be prevented even in a case of a low relative speed, for example, in a scene where the speed is high and the inter-vehicle gap is small, that is, where the risk of colliding with the preceding vehicle is high.

The present invention has been made based on such an idea. An object of the present invention is to provide a vehicle control device that prevents a delay in operating a brake assist control in a scene where the risk of colliding with the preceding vehicle is high, even in a case of a low relative speed.

According to the invention defined by the appended set of claims, a vehicle control device includes:
a brake assist controller configured to perform a brake assist control to provide a brake with a braking force when a driver operates a brake pedal, the braking force being equal to or greater than a braking force corresponding to a depression amount of the brake pedal;
an inter-vehicle gap sensor configured to detect an inter-vehicle gap between an own vehicle and a preceding vehicle;
a relative speed sensor configured to detect a relative speed between the own vehicle and the preceding vehicle; and
a vehicle speed sensor configured to detect a vehicle speed of the own vehicle, wherein
the brake assist controller determines that an operating condition for the brake assist control is satisfied if a time to collision calculated from the relative speed and the inter-vehicle gap is equal to or smaller than a reference time to collision, and if the time to collision is larger than the reference time to collision, the brake assist controller determines that the operating condition is satisfied if a time headway calculated from the vehicle speed and the inter-vehicle gap is equal to or smaller than a reference time headway.

According to the present invention, the delay in operating a brake assist control can be prevented in a scene where the risk of colliding with the preceding vehicle is high, even in a case of a relative speed is low.

### Brief Description of Drawings

FIG. 1 is a block diagram illustrating a configuration of a vehicle control device according to an embodiment of the present invention.
FIG. 2 is a diagram illustrating an example of an operating condition table used by a brake assist controller to determine whether or not an operating condition for a brake assist control is satisfied.
FIG. 3 is a chart illustrating a relationship between TTC and THW, and risk level in the operating condition table.
FIG. 4 is a chart illustrating a relationship between a depression speed and THW, and risk level in a range where TTC is larger than 1.2 and equal to or smaller than 1.8 in the operating condition table.
FIG. 5 is a chart illustrating a relationship between target deceleration and THW, and risk level in a range where TTC is larger than 1.2 and equal to or smaller than 1.8 in the operating condition table.
FIG. 6 is a diagram illustrating a use case of the embodiment of the present invention.
FIG. 7 is a flowchart illustrating an example of a process of the vehicle control device according to the embodiment of the present invention.
FIG. 8 is a chart defining conditions of TTC and THW according to an exemplary modification of the present invention.

### Description of Embodiment

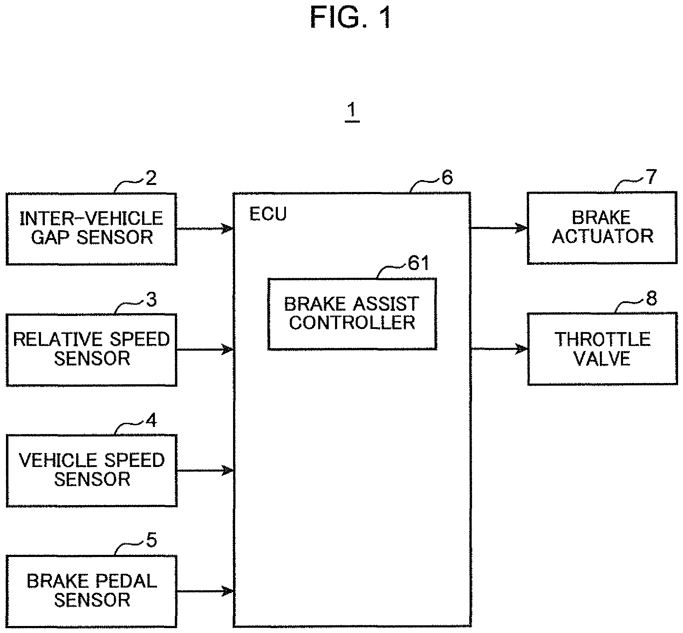

FIG. 1 is a block diagram illustrating a configuration of a vehicle control device 1 according to an embodiment of the present invention. The vehicle control device 1 is mounted in a four-wheel vehicle and performs a brake assist control on the four-wheel vehicle. The vehicle control device 1 includes an inter-vehicle gap sensor 2, a relative speed sensor 3, a vehicle speed sensor 4, a brake pedal sensor 5, an electronic control unit (ECU) 6, a brake actuator 7, and a throttle valve 8.

The inter-vehicle gap sensor 2 includes, for example, a laser radar. The inter-vehicle gap sensor 2 detects an inter-vehicle gap to a preceding vehicle and an orientation of the preceding vehicle by emitting a laser beam, scanning a predetermined angular range in front of an own vehicle with the laser beam, and receiving the reflected laser beam. Instead of the laser radar, the inter-vehicle gap sensor 2 may include a millimeter-wave radar, a stereo camera, or a sonar. The preceding vehicle is a vehicle travelling just in front of, regarding a moving direction, the own vehicle.

The relative speed sensor 3 includes, for example, a Doppler sensor using a millimeter wave and detects a relative speed of the preceding vehicle to the own vehicle.

The vehicle speed sensor 4 includes, for example, a wheel speed sensor and detects a vehicle speed of the own vehicle. The wheel speed sensor includes, for example, a gear-shaped rotor provided to a rotating part such as a brake drum, and a sensing unit disposed with a certain gap to the rotor and including a coil, a magnetic pole, and the like. The wheel speed sensor detects a rotational speed of a wheel based on an alternating voltage generated in the coil by rotation of the rotor.

The brake pedal sensor 5 includes, for example, a potentiometer angle sensor in which a contact point slides on a resistance element. The brake pedal sensor 5 detects a depression amount of the brake pedal, converts the depression amount into an electric signal, and outputs the electric signal to the ECU 6. In the present embodiment, the brake pedal sensor 5 indicates the depression amount of the brake pedal by a rate of an actual depression amount to the maximum depression amount of the brake pedal which is 100.

The ECU 6 includes a computer including a processor such as a CPU, and a memory such as a ROM and a RAM, and totally controls the vehicle control device 1. In the present embodiment, the ECU 6 has a function of a brake assist controller 61. The brake assist controller 61 is implemented by the processor of the ECU 6 executing a predetermined control program.

The brake assist controller 61 performs a brake assist control that provides a brake with a braking force equal to or greater than a braking force corresponding to a depression amount of the brake pedal. In the present embodiment, the brake assist controller 61 calculates a time to collision (hereinafter referred to as "TTC") by dividing the inter-vehicle gap detected by the inter-vehicle gap sensor 2 by the relative speed detected by the relative speed sensor 3. The brake assist controller 61 calculates a time headway (hereinafter referred to as "THW") by dividing the inter-vehicle gap to the preceding vehicle detected by the inter-vehicle gap sensor 2 by the vehicle speed of the own vehicle detected by the vehicle speed sensor 4.

If the TTC is equal to or smaller than a reference time to collision (hereinafter referred to as "reference TTC"), the brake assist controller 61 determines that an operating condition for the brake assist control is satisfied. Meanwhile, if the TTC is larger than the reference TTC, the brake assist controller 61 determines that the operating condition is satisfied if the THW is equal to or smaller than a reference time headway (hereinafter referred to as "reference THW").

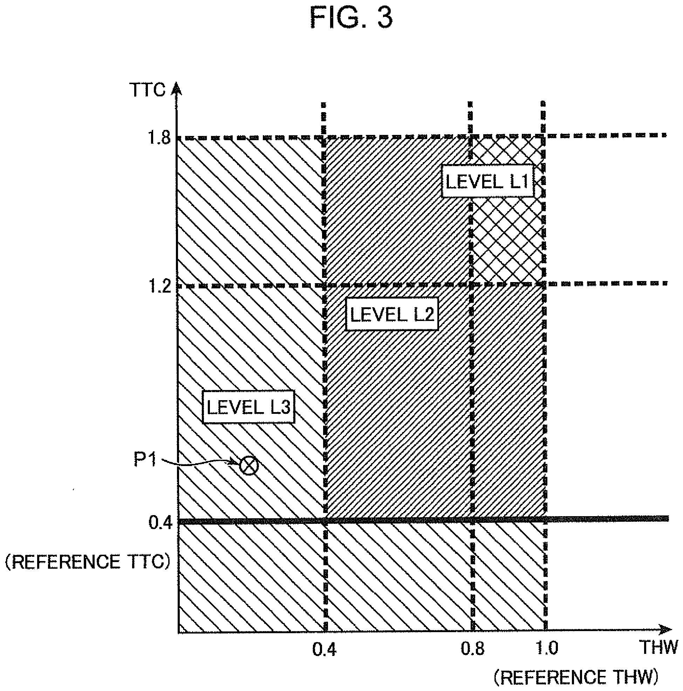

Now, reference is made to FIG. 3. Conventionally, since only the TTC is considered, the brake assist control is not operated when the TTC and the THW take values defined by a point P1 where the relative speed is low and the TTC is larger than the reference TTC of "0.4". Thus, in order for the brake assist control to be operated, it is necessary to wait until the inter-vehicle gap further decreases so that the TTC becomes equal to or smaller than the reference TTC of "0.4".

However, although the relative speed is low at the point P1, since the THW is small, the risk of collision with the preceding vehicle is high. Accordingly, in the present embodiment, even when the TTC is larger than the reference TTC of "0.4", the brake assist control is operated if the THW is smaller than the reference THW of "1.0". As a result, a state of the brake assist control not operating can be prevented in a scene where the risk of colliding with the preceding vehicle is high as at the point P1.

Referring back to FIG. 1, the brake actuator 7 causes the brake (not shown) to generate a braking force instructed by a braking command which is output from the ECU 6. To do so, for example, the brake actuator 7 operates the brake with a hydraulic pressure corresponding to the braking force indicated by the braking command. The brake is, for example, a disk brake or a drum brake for braking a wheel. In response to the command by the ECU 6, the throttle valve 8 adjusts an amount of air taken into an engine (not shown).

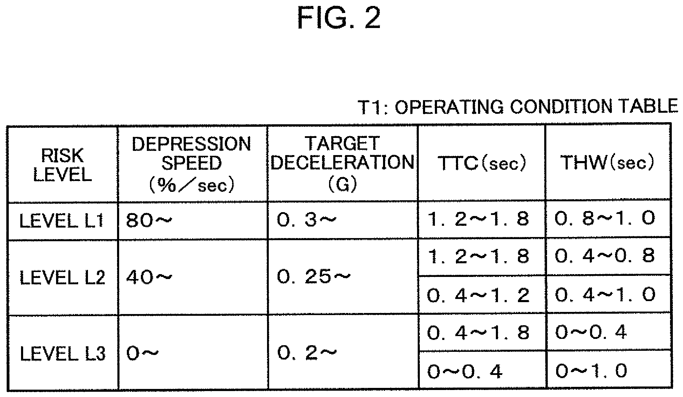

FIG. 2 is a diagram illustrating an example of an operating condition table T1 used by the brake assist controller 61 to determine whether or not an operating condition for the brake assist control is satisfied. The operating condition table T1 stores a correspondence relationship between the "depression speed", the "target deceleration", the "TTC" and the "THW", and the risk level.

The risk level is an indicator of a degree of risk of the own vehicle colliding with the preceding vehicle. FIG. 3 is a chart illustrating a relationship between the TTC and the THW, and the risk level shown in the operating condition table T1.

In the present embodiment, there are three stages in the risk level, that is, from level L1 to level L3. The risk level is the highest in level L3, the highest after level L3 in level L2, and the highest after level L2 in level L1.

In the chart in FIG. 3, levels L1 to L3 are mapped in a two dimensional space defined by a vertical axis representing the TTC (sec) and a horizontal axis representing the THW (sec).

As the inter-vehicle gap to the preceding vehicle decreases, the risk of the own vehicle colliding with the preceding vehicle increases, and as the relative speed to the preceding vehicle increases, the risk of the own vehicle colliding with the preceding vehicle increases. The TTC, expressed by (inter-vehicle gap)/(relative speed), indicates that the degree of risk of collision is higher for a smaller value of the TTC.

As the inter-vehicle gap to the preceding vehicle decreases, the risk of the own vehicle colliding with the preceding vehicle increases, and as the vehicle speed of the own vehicle increases, the risk of the own vehicle colliding with the preceding vehicle increases. The THW, expressed by (inter-vehicle gap)/(vehicle speed of own vehicle), indicates that the degree of risk of collision is higher for a smaller value of the THW Accordingly, in the chart in FIG. 3, the risk level is set higher for a smaller TTC or a smaller THW, namely, the risk level increases toward the left bottom.

Specifically, in FIG. 3, a region of level L3 is set to have an L-shape facing the vertical axis and the horizontal axis, a region of level L2 is set to have an L-shape facing the right side of the region of level L3, and a region of level L1 is set to have a square-shape facing the right side of the region of level L2.

The regions of levels L1 to L3 are described by values as shown below. Specifically, with reference to FIG. 2, in a case where the TTC is larger than 1.2 and equal to or smaller than 1.8, if the THW is larger than 0.8 and equal to or smaller than 1.0, the risk level is level L1.

In a case where the TTC is larger than 1.2 and equal to or smaller than 1.8, if the THW is larger than 0.4 and equal to or smaller than 0.8, the risk level is level L2. In a case where the TTC is larger than 0.4 and equal to or smaller than 1.2, if the THW is larger than 0.4 and equal to or smaller than 1.0, the risk level is level L2.

Furthermore, in a case where the TTC is larger than 0.4 and equal to or smaller than 1.8, if the THW is larger than 0 and equal to or smaller than 0.4, the risk level is level L3. In a case where the TTC is larger than 0 and equal to or smaller than 0.4, if the THW is larger than 0 and equal to or smaller than 1.0, the risk level is level L3.

The values of the TTC ("0.4", "1.2", and "1.8") and the values of the THW ("0.4", "0.8", and "1.0") determining the risk levels are each an example value, and other values may be used. The risk level is defined by three stages, as an example. However, the risk level may be defined by four stages or more or two stages or less. In FIG. 3, the TTC of "0.4" is an example of the reference TTC, and the THW of "1.0" is an example of the reference THW.

Now, reference is made back to FIG. 2. A condition of the depression speed (%/sec) corresponding to the risk level is stored in "depression speed" field. The "depression speed" indicates the speed of a driver pressing down the brake pedal. The brake assist controller 61 calculates the depression speed by differentiating the depression amount detected by the brake pedal sensor 5 with respect to time.

In the example in FIG. 2, the depression speed is higher than 80 %/sec for a condition of level L1, higher than 40 %/sec for a condition of level L2, and higher than 0 %/sec for a condition of level L3.

A condition of the target deceleration (G) corresponding to the risk level is stored in "target deceleration" field. The target deceleration is a target value for deceleration and is determined according to the depression amount of the brake pedal given by the driver. The brake assist controller 61 has, for example, a target deceleration determination map (not shown) in which a correspondence relationship between the depression amount of the brake pedal and the target deceleration is defined in advance, and refers to the target deceleration determination map to determine the target deceleration corresponding to a current depression amount. The target deceleration determination map stores the correspondence relationship between the two in which the target deceleration increases as the depression amount increases.

In the example in FIG. 2, the target deceleration is higher than 0.3 for a condition of level L1, higher than 0.25 for a condition of level L2, and higher than 0.2 for a condition of level L3.

A condition of the TTC corresponding to the risk level is stored in "TTC" field, and a condition of the THW corresponding to the risk level is stored in "THW" field. Details on the conditions stored in the "TTC" field and the "THW" field are described in FIG. 3 and are omitted.

The brake assist controller 61 calculates the depression speed, the target deceleration, the TTC, and the THW at a predetermined sampling period. The brake assist controller 61 refers to the operating condition table T1 and determines to which level the current depression speed, the target deceleration, the TTC, and the THW belong.

For example, when the TTC and the THW are in the region of level L1, the brake assist controller 61 determines that the operating condition of level L1 is satisfied if the depression speed is higher than 80 %/sec and the target deceleration is higher than 0.3. When the TTC and the THW are in the region of level L2, the brake assist controller 61 determines that the operating condition of level L2 is satisfied if the depression speed is higher than 40 %/sec and the target deceleration is higher than 0.25. When the TTC and the THW are in the region of level L3, the brake assist controller 61 determines that the operating condition of level L3 is satisfied if the depression speed is higher than 0 %/sec and the target deceleration is higher than 0.2.

Values "80", "40", and "0" stored in the "depression speed" field are each an example of a reference depression speed. The conditions of the depression speed are defined in the operating condition table T1 so that the brake assist control is operated at a smaller depression speed for a higher degree of risk of colliding with the preceding vehicle, the risk being higher in level L3 than in level L2 and higher in level L2 than in level L1.

Values "0.3", "0.25", and "0.2" stored in the "target deceleration" field are each an example of a reference target deceleration. The conditions of the target deceleration are defined in the operating condition table T1 so that the brake assist control is operated at a smaller target deceleration for a higher degree of risk of colliding with the preceding vehicle, the risk being higher in level L3 than in level L2 and higher in level L2 than in level L1.

Accordingly, the brake assist controller 61 can operate the brake assist control at an earlier timing for a higher degree of risk of colliding with the preceding vehicle.

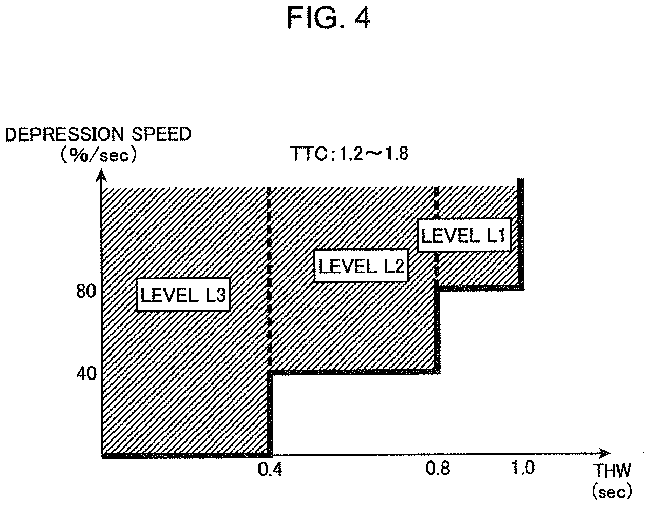

FIG. 4 is a chart illustrating a relationship between the depression speed and the THW, and the risk level in a range where the TTC is larger than 1.2 and equal to or smaller than 1.8 in the operating condition table T1. In the chart in FIG. 4, levels L1 to L3 are mapped in a two dimensional space defined by a vertical axis representing the depression speed (%/sec) and a horizontal axis representing the THW (sec).

As illustrated in the chart in FIG. 4, the reference depression speed is set to "0" in a range where the THW is equal to or smaller than 0.4, and the brake assist control of level L3 is operated when the driver presses down the brake pedal even slightly. In a range where the THW is larger than 0.4 and equal to or smaller than 0.8, the reference depression speed is set to "40", so that the brake assist control of level L2 is operated when the driver presses down the brake pedal at a depression speed higher than 40 %/sec. In a range where the THW is larger than 0.8 and equal to or smaller than 1.0, the reference depression speed is set to "80", so that the brake assist control of level L1 is operated when the driver presses down the brake pedal at a depression speed higher than 80 %/sec.

In this way, the reference depression speed is decreased as the THW is shorter, so that the brake assist controller 61 operates the brake assist control at an earlier timing as a risk of colliding with the preceding vehicle becomes higher.

The reference depression speed ("0", "40", and "80") in FIG. 4 is given as an example, and other values may be used.

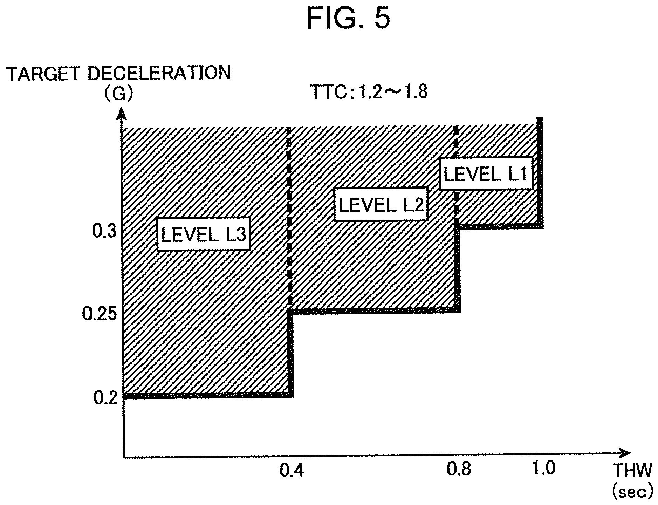

FIG. 5 is a chart illustrating a relationship between the target deceleration and the THW, and the risk level in a range where the TTC is larger than 1.2 and equal to or smaller than 1.8 in the operating condition table T1. In the chart in FIG. 5, levels L1 to L3 are mapped in a two dimensional space defined by a vertical axis representing the target deceleration (G) and a horizontal axis representing the THW (sec).

As illustrated in the chart in FIG. 5, the reference target deceleration is set to "0.2" in a range where the THW is equal to or smaller than 0.4, and the brake assist control of level L3 is operated when the target deceleration becomes higher than 0.2. The reference target deceleration is set to "0.25" in a range where the THW is larger than 0.4 and equal to or smaller than 0.8, and the brake assist control of level L2 is operated when the target deceleration becomes higher than 0.25. The reference target deceleration is set to "0.3" in a range where the THW is larger than 0.8 and equal to or smaller than 1.0, and the brake assist control of level L1 is operated when the target deceleration becomes higher than 0.3.

In this way, the reference target deceleration is decreased as the THW is shorter, so that the brake assist controller 61 operates the brake assist control at an earlier timing as a risk of colliding with the preceding vehicle becomes higher.

The reference target deceleration ("0.3", "0.25", and "0.2") in FIG. 5 is given as an example, and other values may be used.

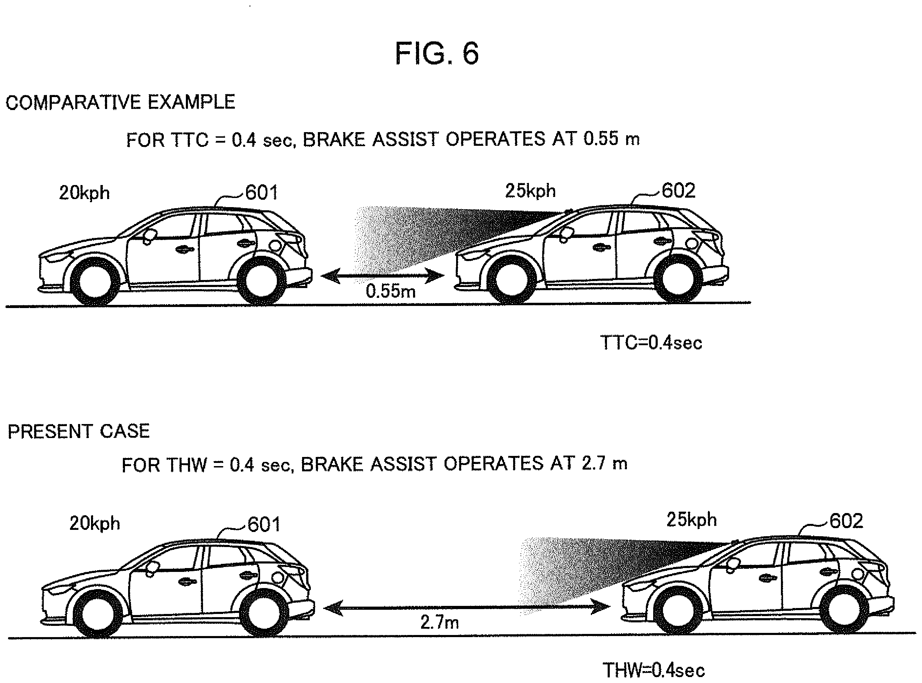

FIG. 6 is a diagram illustrating a use case of the embodiment of the present invention. In FIG. 6, an upper portion illustrates a comparative example and a lower portion illustrates the vehicle control device 1 according to the present embodiment (present case). In both the comparative example and the present case, the preceding vehicle 601 is travelling at 20 kilometer per hour (kph) and the own vehicle 602 is travelling at 25 kph. In both the comparative example and the present case, the reference TTC is set to 0.4 sec and the reference THW is set to 0.4 sec. In a use case in FIG. 6, the depression speed and the target deceleration are excluded from the operating condition for the brake assist control for convenience of description. In the comparative example, the brake assist control is operated considering only the TTC, not considering the THW

In the comparative example, the relative speed of the own vehicle 602 is 5 kph, which is equal to about 1.38 meter per second (mps). From the calculation result of 1.38 mps × 0.40 sec = about 0.55 m, the brake assist control is not operated unless the inter-vehicle gap between the preceding vehicle 601 and the own vehicle 602 becomes equal to or smaller than about 0.55 m so that the TTC becomes equal to or smaller than the reference TTC of "0.4".

In contrast, in the present case, the own vehicle 602 has a speed of 25 kph, which is equal to about 6.94 mps. From the calculation result of 6.94 mps × 0.4 sec = about 2.7 m, the brake assist control is operated when the inter-vehicle gap between the preceding vehicle 601 and the own vehicle 602 becomes equal to or smaller than about 2.7 m so that the THW becomes equal to or smaller than the reference THW of "0.4". That is, in the present case, even when the TTC is not smaller than the reference TTC, the brake assist control is operated when the THW is equal to or smaller than the reference THW

Accordingly, in the present case, it is found that the brake assist control can be operated at an earlier timing in a scene where the risk of collision is high even when the relative speed is low.

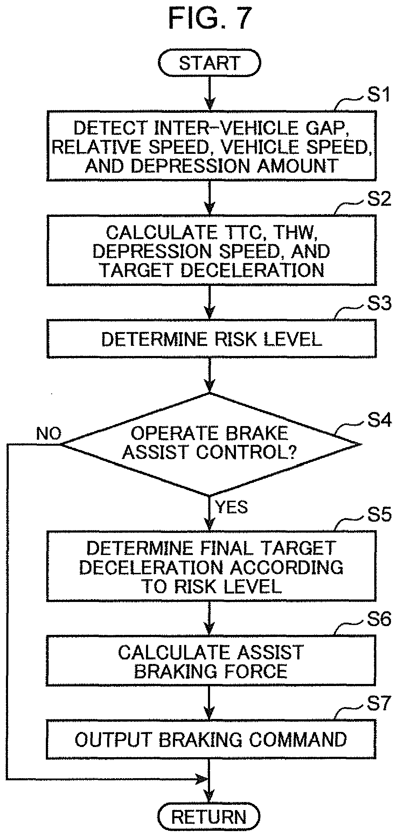

FIG. 7 is a flowchart illustrating an example of a process of the vehicle control device 1 according to the embodiment of the present invention. The flowchart is repeatedly performed at a predetermined sampling period. First, in S1, the inter-vehicle gap sensor 2, the relative speed sensor 3, the vehicle speed sensor 4, and the brake pedal sensor 5 respectively detect the inter-vehicle gap, the relative speed, the vehicle speed, and the depression amount.

In S2, the brake assist controller 61 calculates the TTC from (inter-vehicle gap)/(relative speed), the THW from (inter-vehicle gap)/(vehicle speed), the depression speed by differentiating the depression amount, and the target deceleration corresponding to the depression amount.

In S3, the brake assist controller 61 refers to the operating condition table T1 and determines the risk level from the TTC, the THW, the depression speed, and the depression amount calculated in S2.

In S4, if the determination result in S3 indicates that the TTC, the THW, the depression speed, and the depression amount calculated in S2 belong to any one of levels L1 to L3, the brake assist controller 61 determines that the brake assist control is to be operated (YES in S4), and the process proceeds to S5.

Meanwhile, if the determination result in S3 indicates that the TTC, the THW, the depression speed, and the depression amount calculated in S2 belong to neither of levels L1 to L3, the brake assist controller 61 determines that the brake assist control is not to be operated (NO in S4), and the process returns to S1.

In S5, the brake assist controller 61 sets a final target deceleration corresponding to the risk level indicated by the determination result in S3. A value of the final target deceleration is previously given for each of level L1, level L2, and level L3, and the given values are in the order of level L1, level L2, and level L3, that is, in the increasing order of the risk level. To provide braking as smooth as possible for each of the risk levels, the final target deceleration is given a value as low as possible that can still avoid collision with the preceding vehicle.

In S6, the brake assist controller 61 subtracts the target deceleration calculated in S2 from the final target deceleration determined in S5 to calculate a deviation of the target deceleration from the final target deceleration, and calculates an assist braking force to cancel out the deviation to zero. Since the final target deceleration takes a higher value in the order of level L1, level L2, and level L3, the calculated deviation tends to take a higher value in the same order. Thus, in the order of level L1, level L2, and level L3, that is, as the risk of collision increases, the calculated assist braking force tends to take a larger value.

In S7, the brake assist controller 61 adds the assist braking force calculated in S6 to the braking force corresponding to the target deceleration calculated in S2 to calculate the final braking force, and outputs to the brake actuator 7 a braking command to operate the brake with the final braking force. The brake brakes the vehicle with the final braking force. When S7 finishes, the process returns to S1.

In the present embodiment described above, even when the TTC is larger than the reference TTC, it is determined that the operating condition for the brake assist control is satisfied if the THW is equal to or smaller than the reference THW Therefore, in the present aspect, the calculated THW is equal to or smaller than the reference THW in a scene where the risk of colliding with the preceding vehicle is high, even when the relative speed is low, and hence, a delay in operating the brake assist control can be prevented.

Furthermore, since the reference depression speed decreases as the THW decreases and the risk of collision increases, the brake assist control can be operated at an earlier timing for a higher risk of collision.

In addition, since the reference target deceleration decreases as the THW decreases and the risk of collision increases, the brake assist control can be operated at an earlier timing for a higher risk of collision.

Furthermore, since the assist braking force increases as the THW decreases and the risk of collision increases, the degree of the brake assist control can be raised for a higher risk of collision.

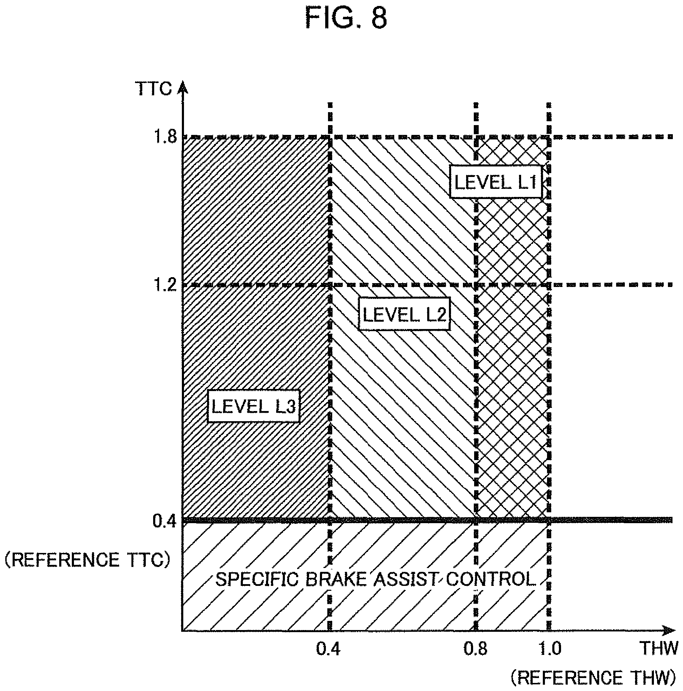

The present embodiment includes exemplary modifications described below.
(1) In the embodiment described above, the conditions of the TTC and the THW are defined as in the chart illustrated in FIG. 3. However, the present invention is not limited to such a definition. The conditions of the TTC and the THW may be defined as in a chart illustrated in FIG. 8. FIG. 8 is a chart defining conditions of the TTC and the THW according to an exemplary modification of the present invention. In FIG. 8, the vertical axis and the horizontal axis are the same as those in FIG. 3. In FIG. 8, in a region where the TTC is equal to or smaller than the reference TTC of "0.4" and the THW is equal to or smaller than the reference THW of "1.0", a specific brake assist control is performed. Meanwhile, in FIG. 8, in a case where the TTC is larger than the reference TTC of "0.4", the risk level is set to a lower level as the THW increases. Specifically, when the TTC is larger than the reference TTC of "0.4" and equal to or smaller than "1.8", the risk level is set to level L3 if the THW is larger than 0 and equal to or smaller than 0.4, the risk level is set to level L2 if the THW is larger than 0.4 and equal to or smaller than 0.8, and the risk level is set to level L1 if the THW is larger than 0.8 and equal to or smaller than 1.0.

Thus, in this exemplary modification, when the TTC and the THW satisfy the condition of level L3, the brake assist control is operated if the depression speed and the target deceleration satisfy the condition of level L3 in the operating condition table T1. The same can be said for level L2 and level L1.

As the specific brake assist control illustrated in FIG. 8, for example, such a brake control method may be employed in which the assist braking force is determined so that the deviation between the predetermined final target deceleration and the target deceleration corresponding to the depression amount becomes 0, and the assist braking force is added to the braking force corresponding to the target deceleration to calculate the final braking force. Alternatively, as the specific brake assist control, a brake assist control equivalent to a control for any one of level L3, level L2, and level L1 may be employed.

(2) In the operating condition table T1 illustrated in FIG. 2, both the depression speed and the target deceleration are used as the conditions for the brake assist control. However, the present invention is not limited to such a configuration. Either of the depression speed and the target deceleration may be used as the condition for the brake assist control.

(3) The depression speed and the target deceleration may be excluded from the operating condition table T1 illustrated in FIG. 2. In such a case, the brake assist controller 61 may refer to the chart illustrated in FIG. 3, determine the risk level corresponding to the TTC and the THW, and operate the brake assist control if the depression amount is larger than 0.

(4) The vehicle control device 1 according to the embodiment described above is applied to a vehicle having an engine as a power source. However, the present invention is not limited to such a configuration. The vehicle control device 1 may be applied to an electric vehicle having a motor as a power source or a hybrid vehicle having such a power source that is a combination of an engine and a motor.

### (Summary of Embodiment)

A vehicle control device according to one aspect of the present invention includes:
a brake assist controller configured to perform a brake assist control to provide a brake with a braking force when a driver operates a brake pedal, the braking force being equal to or greater than a braking force corresponding to a depression amount of the brake pedal;
an inter-vehicle gap sensor configured to detect an inter-vehicle gap between an own vehicle and a preceding vehicle;
a relative speed sensor configured to detect a relative speed between the own vehicle and the preceding vehicle; and
a vehicle speed sensor configured to detect a vehicle speed of the own vehicle, wherein
the brake assist controller determines that an operating condition for the brake assist control is satisfied if a time to collision calculated from the relative speed and the inter-vehicle gap is equal to or smaller than a reference time to collision, and if the time to collision is larger than the reference time to collision, the brake assist controller determines that the operating condition is satisfied if a time headway calculated from the vehicle speed and the inter-vehicle gap is equal to or smaller than a reference time headway.

Conventionally, even in a scene where the risk of colliding with the preceding vehicle is high, that is, where the speed is high and the inter-vehicle gap is small for example, the time to collision may be calculated to be larger than the reference time to collision if the relative speed to the preceding vehicle is low, so that a determination may be made such that the operating condition for the brake assist control is not satisfied.

In contrast, in this aspect, in a case where the time to collision is larger than the reference time to collision, it is determined that the operating condition for the brake assist control is satisfied if the time headway calculated from the vehicle speed and the inter-vehicle gap is equal to or smaller than the reference time headway. Thus, in this aspect, even when the relative speed is low, the time headway is calculated to be equal to or smaller than the reference time headway in a scene where the risk of colliding with the preceding vehicle is high. Hence, a delay in operating the brake assist control can be prevented.

In the above aspect, it is preferable that the brake assist controller determines that the operating condition is satisfied if a condition in which a depression speed of the brake pedal is higher than a reference depression speed is further satisfied, and the reference depression speed decreases as the time headway decreases.

According to this aspect, since the reference depression speed decreases as the time headway decreases, the brake assist control can be operated at a lower depression speed for a smaller time headway. Thus, the brake assist control can be operated earlier as the time headway is decreased to make the risk of collision higher.

In the above aspect, it is preferable that the brake assist controller determines that the operating condition is satisfied if a condition in which a target deceleration corresponding to the depression amount of the brake pedal is equal to or higher than a reference target deceleration is further satisfied, and the reference target deceleration decreases as the time headway decreases.

According to this aspect, since the reference target deceleration decreases as the time headway decreases, the brake assist control can be operated at a lower target deceleration as the time headway decreases. Thus, the brake assist control can be operated at an earlier timing for a smaller time headway with a higher risk of collision.

In the above aspect, it is preferable that the brake assist controller increases an assist braking force which is added to a braking force corresponding to the depression amount of the brake pedal as the time headway decreases, when the brake assist controller has determined that the operating condition is satisfied.

According to this aspect, since the assist braking force increases as the time headway decreases and the risk of collision becomes higher, the degree of the brake assist control can be raised as the risk of collision becomes higher.

## Claims

1. A vehicle control device (1) comprising:
a brake assist controller (61) configured to perform a brake assist control to provide a brake with a braking force when a driver operates a brake pedal, the braking force being equal to or greater than a braking force corresponding to a depression amount of the brake pedal;
an inter-vehicle gap sensor (2) configured to detect an inter-vehicle gap between an own vehicle (602) and a preceding vehicle (601);
a relative speed sensor (3) configured to detect a relative speed between the own vehicle (602) and the preceding vehicle (601); and
a vehicle speed sensor (4) configured to detect a vehicle speed of the own vehicle (602), **characterized in that**
the brake assist controller (61) determines that an operating condition for the brake assist control is satisfied if a time to collision calculated from the relative speed and the inter-vehicle gap is equal to or smaller than a reference time to collision, and if the time to collision is larger than the reference time to collision, the brake assist controller (61) determines that the operating condition is satisfied if a time headway calculated from the vehicle speed and the inter-vehicle gap is equal to or smaller than a reference time headway.

2. The vehicle control device (1) according to claim 1, wherein the brake assist controller (61) determines that the operating condition is satisfied if a condition in which a depression speed of the brake pedal is higher than a reference depression speed is further satisfied, and the reference depression speed decreases as the time headway decreases.

3. The vehicle control device (1) according to claim 1 or 2, wherein the brake assist controller (61) determines that the operating condition is satisfied if a condition in which a target deceleration corresponding to the depression amount of the brake pedal is equal to or higher than a reference target deceleration is further satisfied, and the reference target deceleration decreases as the time headway decreases.

4. The vehicle control device (1) according to any one of claims 1 to 3, wherein the brake assist controller (61) increases an assist braking force which is added to a braking force corresponding to the depression amount of the brake pedal as the time headway decreases, when the brake assist controller (61) has determined that the operating condition is satisfied.

## Patentansprüche

1. Fahrzeugsteuerungsvorrichtung (1), aufweisend:
eine Bremsunterstützungssteuerung (61), die konfiguriert ist, um eine Bremsunterstützungssteuerung durchzuführen, um eine Bremse mit einer Bremskraft bereitzustellen, wenn ein Fahrer ein Bremspedal betätigt, wobei die Bremskraft gleich oder größer als eine Bremskraft ist, die einem Betätigungsausmaß des Bremspedals entspricht;
einen Zwischenfahrzeugabstandssensor (2), der konfiguriert ist, um einen Zwischenfahrzeugabstand zwischen einem eigenen Fahrzeug (602) und einem vorausfahrenden Fahrzeug (601) zu detektieren;
einen Relativgeschwindigkeitssensor (3), der konfiguriert ist, eine Relativgeschwindigkeit zwischen dem eigenen Fahrzeug (602) und dem vorausfahrenden Fahrzeug (601) zu detektieren; und
einen Fahrzeuggeschwindigkeitssensor (4), der konfiguriert ist, eine Fahrzeuggeschwindigkeit des eigenen Fahrzeugs (602) zu detektieren, wobei
die Bremsunterstützungssteuerung (61) bestimmt, dass eine Betriebsbedingung für die Bremsunterstützungssteuerung erfüllt ist, wenn eine Zeit bis zu einer Kollision, die aus der relativen Geschwindigkeit und dem Zwischenfahrzeugabstand berechnet wird, gleich oder kleiner als eine Referenzzeit bis zu einer Kollision ist, und wenn die Zeit bis zu einer Kollision größer als die Referenzzeit bis zu einer Kollision ist, bestimmt die Bremsunterstützungssteuerung (61), dass die Betriebsbedingung erfüllt ist, wenn ein Zeitabstand, der aus der Fahrzeuggeschwindigkeit und dem Zwischenfahrzeugabstand berechnet wird, gleich oder kleiner als ein Referenzzeitabstand ist.

2. Fahrzeugsteuervorrichtung (1) nach Anspruch 1, wobei die Bremsunterstützungssteuerung (61) bestimmt, dass die Betriebsbedingung erfüllt ist, wenn ferner eine Bedingung erfüllt ist, in der eine Betätigungsgeschwindigkeit des Bremspedals höher als eine Referenzbetätigungsgeschwindigkeit ist, und die Referenzbetätigungsgeschwindigkeit abnimmt, wenn der Zeitabstand abnimmt.

3. Fahrzeugsteuervorrichtung (1) nach Anspruch 1 oder 2, wobei die Bremsunterstützungssteuerung (61) bestimmt, dass die Betriebsbedingung erfüllt ist, wenn ferner eine Bedingung erfüllt ist, bei der eine Sollverzögerung, die dem Betätigungsausmaß des Bremspedals entspricht, gleich oder höher als eine Referenzsollverzögerung ist, und die Referenzsollverzögerung abnimmt, wenn der Zeitabstand abnimmt.

4. Fahrzeugsteuervorrichtung (1) nach einem der Ansprüche 1 bis 3, wobei die Bremsunterstützungssteuerung (61) eine Unterstützungsbremskraft erhöht, die zu einer Bremskraft hinzugefügt wird, die dem Betätigungsausmaß des Bremspedals entspricht, wenn der Zeitabstand abnimmt, wenn die Bremsunterstützungssteuerung (61) bestimmt hat, dass die Betriebsbedingung erfüllt ist.

## Revendications

1. Dispositif de commande de véhicule (1) comprenant :
un contrôleur d'assistance au freinage (61) configuré pour réaliser une commande d'assistance au freinage pour fournir un freinage avec une force de freinage lorsqu'un conducteur utilise une pédale de frein, la force de freinage étant supérieure ou égale à une force de freinage correspondant à une quantité d'enfoncement de la pédale de frein ;
un capteur de distance entre véhicules (2) configuré pour détecter une distance entre véhicules entre un véhicule propre (602) et un véhicule qui précède (601) ;
un capteur de vitesse relative (3) configuré pour détecter une vitesse relative entre le véhicule propre (602) et le véhicule qui précède (601) ; et
un capteur de vitesse de véhicule (4) configuré pour détecter une vitesse de véhicule du véhicule propre (602),
**caractérisé en ce que**
le contrôleur d'assistance au freinage (61) détermine qu'une condition de fonctionnement du contrôleur d'assistance au freinage est remplie si un temps avant collision calculé à partir de la vitesse relative et de la distance entre véhicules est inférieur ou égal à un temps avant collision de référence, et si le temps avant collision est plus important que le temps avant collision de référence, le contrôleur d'assistance au freinage (61) détermine que la condition de fonctionnement est remplie si un temps de progression calculé à partir de la vitesse de véhicule et la distance entre véhicules est inférieur ou égal à un temps de progression de référence.

2. Dispositif de commande de véhicule (1) selon la revendication 1, dans lequel le contrôleur d'assistance au freinage (61) détermine que la condition de fonctionnement est remplie si une condition, selon laquelle une vitesse d'enfoncement de la pédale de frein est plus élevée qu'une vitesse d'enfoncement de référence, est en outre remplie, et la vitesse d'enfoncement de référence diminue au fur et à mesure que le temps de progression diminue.

3. Dispositif de commande de véhicule (1) selon la revendication 1 ou 2, dans lequel le contrôleur d'assistance au freinage (61) détermine que la condition de fonctionnement est remplie si une condition, selon laquelle une décélération cible correspondant à la quantité d'enfoncement de la pédale de frein est supérieure ou égale à une décélération cible de référence, est en outre remplie, et la décélération cible de référence diminue au fur et à mesure que le temps de progression diminue.

4. Dispositif de commande de véhicule (1) selon l'une quelconque des revendications 1 à 3, dans lequel le contrôleur d'assistance au freinage (61) augmente une force de freinage d'assistance, laquelle est ajoutée à la force de freinage correspondant à la quantité d'enfoncement de la pédale de frein alors que le temps de progression diminue lorsque le contrôleur d'assistance au freinage (61) a déterminé que la condition de fonctionnement est remplie.
